# DEMANDE DE BREVET EUROPEEN

(11) **EP 0 927 840 A1**
(43) Date de publication de la demande: **07.07.1999**
(21) Numéro de dépôt: 99400004.0
(22) Date de dépôt: 04.01.1999
(51) Int. Cl.: F16J 9/20

(54) **Segment racleur pour piston de moteur à combustion interne**

(30) Priorité: 05.01.1998 FR 9800015
(71) Demandeur: PERFECT CIRCLE EUROPE, 78300 Poissy (FR)
(72) Inventeur: Fefeu, Michel Alain, 78114 Magny les Hameaux (FR)
(74) Mandataire: Picard, Jean-Claude Georges

(57) **Abrégé**

Segment, notamment racleur, pour piston de moteur à combustion interne, comportant des portées périphériques inférieure et supérieure espacées l'une de l'autre, destinées à entrer en contact avec la paroi interne 13 du cylindre, et dans lequel, à l'état libre, la surface de la portée inférieure 20 est décalée vers l'extérieur par rapport à la surface de la portée supérieure 19. Conformément à l'invention, il est prévu que lesdites surfaces des portées inférieure et supérieure s'étendent sur un même cône de révolution axé sur l'axe du piston, ce qui permet de compenser au mieux la mise en cône ouvert vers le bas de la gorge de ce segment après chauffe du moteur.

Application à tous moteurs.

## Description

La présente invention concerne un segment, notamment racleur, pour piston de moteur à combustion interne, comportant des portées périphériques inférieure et supérieure, espacées l'une de l'autre, destinées à entrer en contact avec la paroi interne du cylindre, et dans lequel, à l'état libre, la surface de la portée inférieure est décalée vers l'extérieur par rapport à la surface de la portée supérieure.

L'invention vise à résoudre les problèmes posés par la déformation de la tête des pistons, c'est-à-dire de la partie dite "porte-segments", lors de la période de chauffe du moteur, déformation qui est relativement importante sur les moteurs Diesel et sur les pistons articulés, qu'ils soient en fonte ou en acier. Cette déformation est en effet d'autant plus importante que la température et la pression sont élevées dans la chambre de combustion du cylindre, et est plus importante sur les pistons articulés que sur les pistons monoblocs. En effet, sur un piston articulé la masse en liaison par conduction thermique avec la chambre de combustion est moins importante que dans un piston monobloc, du fait de la liaison de la tête du piston à son corps (partie portant la jupe de guidage) par l'intermédiaire de l'axe de pivotement de la bielle du moteur. Dans les pistons articulés, par conséquent, les déformations de la tête dues à une moins grande résistance mécanique s'ajoutent à des dilatations sous l'effet de la chaleur également plus importantes.

L'invention concernera donc surtout ces pistons articulés mais non pas exclusivement, pouvant s'appliquer aussi aux pistons monoblocs.

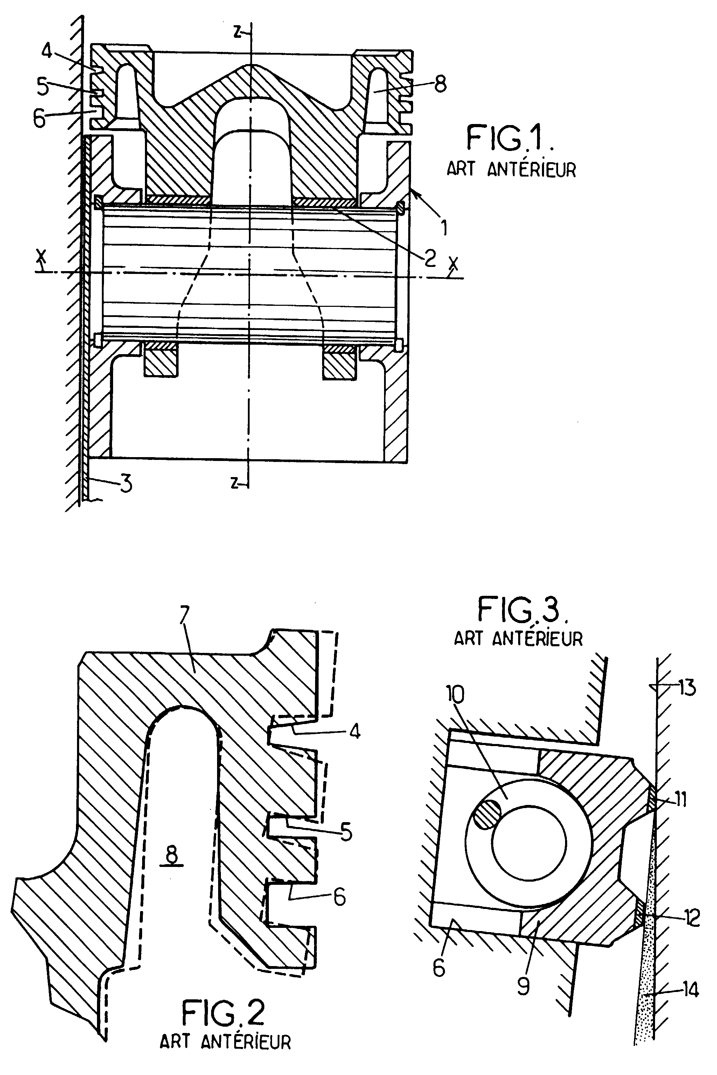

A la figure 1 du dessin ci-annexé on a représenté en coupe axiale un piston articulé de moteur à combustion interne, avec agrandissement partiel à la figure 2.

Sur la figure 1 on a représenté la tête 1 du piston, articulée, autour de l'axe X-X du logement 2 du pied de bielle, sur le corps portant la jupe 3 de guidage, jupe venant dans le prolongement de la surface de portée des différents segments et représentée en trait mixte sur le dessin. Dans les rainures 4, 5 et 6 de la tête 1 sont logés des segments (non représentés), respectivement un segment "coup de feu", un segment d'étanchéité et un segment racleur, celui qui est plus particulièrement concerné par l'invention.

La figure 2 montre, en l'exagérant pour une raison de clarté, la déformation de cette tête de piston après le temps de chauffe du moteur et sous l'effort du à l'explosion. Le trait plein représente cette tête à froid, et le trait en pointillé après déformation. On voit que la partie supérieure de cette tête s'est dilatée radialement, et que la partie inférieure a pivoté vers l'intérieur sous l'effet des efforts de pivotement au niveau de la paroi supérieure 7 de la chambre de refroidissement annulaire 8 de la tête. Il en résulte une mise en cône des rainures 4 à 6 dont le plan moyen, à froid, était perpendiculaire à l'axe Z-Z du piston.

Sur le segment racleur, l'effet de la mise en cône de la gorge 6 est montré, en coupe axiale partielle à plus grande échelle, à la figure 3, ce segment racleur étant ici référencé en 9 et son ressort de mise en extension en 10. Alors qu'à froid les surfaces des portées supérieure 11 et inférieure 12 sont toutes deux en contact avec la surface 13 du cylindre, on voit qu'après déformation, seule la surface de la portée supérieure 11 est encore en contact avec le cylindre, la surface de la portée inférieure 12 en étant écartée. L'inconvénient qui en résulte est que le raclage de l'huile n'est plus assuré que par la portée supérieure, et qu'un "coin d'huile" 14 se forme entre le segment 9 et la surface 13 du cylindre, huile qui peut brûler à l'intérieur du segment et provoquer un dépôt de calamine.

Pour remédier à cet inconvénient, une solution consiste, pour les segments "coup de feu" et d'étanchéité, à leur donner certains profils particuliers, et, de même que pour le segment racleur, à incliner la gorge qui leur sert de logement vers le haut et vers l'extérieur, c'est-à-dire à lui donner une forme en cône de révolution ouvert vers le haut, axé sur l'axe du piston.

Cette inclinaison est telle, en principe, qu'après le temps de chauffe le plan moyen des gorges revient dans une position perpendiculaire à l'axe du piston, ce qui rétablit le contact optimal entre la paroi du cylindre et les surfaces de portée des segments.

L'inconvénient de cette dernière disposition, cependant, réside dans la difficulté d'usinage, surtout pour la gorge du segment racleur, dont l'inclinaison doit être relativement importante, pouvant aller jusqu'au degré.

Le but de la présente invention est de remédier à ces inconvénients de la technique antérieure, et de mettre en oeuvre une solution qui ne nécessite pas un usinage spécial des gorges, notamment pour ce qui est de la gorge du segment racleur sur un piston de moteur à combustion interne à essence ou surtout Diesel, en particulier lorsqu'il s'agit d'un piston articulé.

A cet effet, l'invention concerne un segment, notamment racleur, pour piston de moteur à combustion interne, comportant des portées périphériques inférieure et supérieure espacées l'une de l'autre, destinées à entrer en contact avec la paroi interne du cylindre et dans lequel, à l'état libre, la surface de la portée inférieure est décalée vers l'extérieur par rapport à la surface de la portée supérieure, caractérisé en ce que lesdites surfaces des portées inférieure et supérieure s'étendent sur un même cône de révolution axé sur l'axe du piston, ce qui permet de compenser au mieux la mise en cône ouvert vers le bas de la gorge de ce segment après chauffe du moteur.

Le demi-angle au sommet dudit cône pourra être compris entre 0,2 et 5°.

De la sorte, à froid, seule la surface de la portée inférieure du segment, notamment du segment racleur, sera en contact avec la paroi du cylindre, tandis que la surface de la portée supérieure en sera légèrement écartée, mais ceci n'est qu'une situation transitoire, sans inconvénient. Par contre, à chaud, la mise en cône ouvert vers le bas de la gorge par suite des sollicitations thermiques et mécaniques permettra de rétablir le double contact entre la paroi du cylindre et les surfaces des deux portées, éliminant ainsi les inconvénients de la technique antérieure sans complication d'usinage de la gorge.

L'invention pourra aussi bien s'appliquer aux segments constitués d'une ou de plusieurs pièces, ainsi qu'aux segments de type U-FLEX. Pour les segments constitués de trois pièces, par exemple, à savoir de deux "rails" séparés par une pièce dite "spacer", il suffira de faire en sorte que l'épaulement d'appui périphérique du rail inférieur sur le spacer ait un diamètre supérieur à celui de l'épaulement d'appui du rail supérieur, le spacer étant alors dissymétrique.

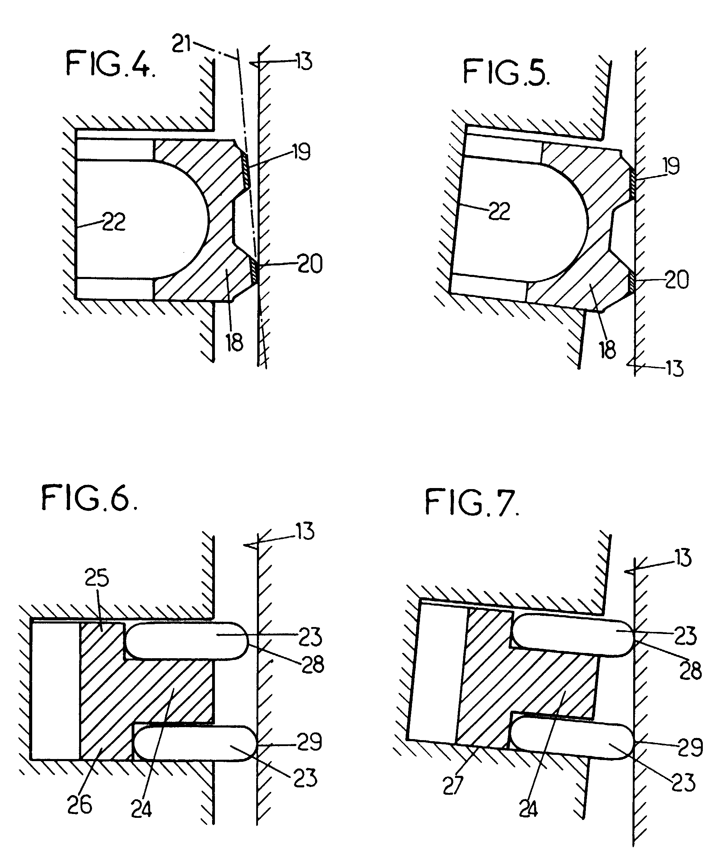

Des modes d'exécution de l'invention sont décrits ci-dessous à titre d'exemples nullement limitatifs, avec référence aux autres figures 4 à 7 du dessin ci-annexé.

Dans le mode de réalisation de la figure 4, le segment conforme à l'invention, par exemple un segment racleur, a été référencé en 18. Les surfaces 19 et 20 des portées supérieure et inférieure du segment 18 s'étendent sur un cône 21 ouvert vers le bas, coaxial avec le piston dans la gorge 22 duquel le segment est logé. Le demi-angle au sommet de ce cône peut être compris entre 0,2 et 5°. De la sorte, à froid seule la surface de la portée inférieure 20 est en contact avec la paroi 13 du cylindre, tandis que la surface de la portée supérieure 19 en est écartée.

Après chauffe du moteur, la gorge 22 et le segment 18 prennent la forme d'un cône coaxial ouvert vers le bas, ce qui amène les surfaces inférieure et supérieure des portées 20 et 19 en contact avec la paroi 13 du cylindre (fig. 5).

Sur les figures 4 et 5 on a représenté des portées revêtues, mais ceci est bien entendu facultatif.

Dans le mode de réalisation des figures 6 et 7 on a montré l'application de l'invention à un segment racleur constitué de trois parties, à savoir deux "rails" circulaires 23 séparés par un "spacer" circulaire 24. L'épaulement inférieur 26 de ce spacer est plus épais que l'épaulement supérieur 25,de sorte que le rail 23 inférieur présente à sa périphérie un diamètre extérieur plus grand que celui du rail 23 supérieur, quoique ces deux rails soient identiques avant montage (leur montage sur le spacer provoque une extension plus grande du rail inférieur). La figure 6 représente la situation du segment à froid, et la figure 7 à chaud. Là encore on voit que la mise sous forme conique de la gorge 27 de ce segment racleur amène le contact entre la paroi interne 13 du cylindre et la surface périphérique supérieure 28 et inférieure 29 des deux rails 23, tandis qu'à froid la gorge 27 a son plan moyen perpendiculaire à l'axe de révolution du piston, l'étanchéité étant alors assurée par le seul rail inférieur.

## Revendications

1. Segment, notamment racleur, pour piston de moteur à combustion interne, comportant des portées périphériques inférieure et supérieure espacées l'une de l'autre, destinées à entrer en contact avec la paroi interne (13) du cylindre et dans lequel, à l'état libre, la surface de la portée inférieure (20,29) est décalée vers l'extérieur par rapport à la surface de la portée supérieure (19, 28), caractérisé en ce que lesdites surfaces des portées inférieure (20) et supérieure (19) s'étendent sur un même cône de révolution (21) axé sur l'axe du piston.

2. Segment selon la revendication 1, caractérisé en ce que le demi-angle au sommet dudit cône (21) est compris entre 0,2 et 5°.

3. Segment selon la revendication 1, du type comprenant deux rails circulaires (23) maintenus sur les épaulements périphériques (25, 26) d'un spacer (24), caractérisé en ce que les diamètres de ces deux épaulements sont différents, de sorte que l'un desdits rails (23) ait un diamètre extérieur différent de l'autre.
